# DEMANDE DE BREVET EUROPEEN

(11) **EP 2 093 201 A2**
(43) Date de publication de la demande: **26.08.2009**
(21) Numéro de dépôt: 09153183.0
(22) Date de dépôt: 19.02.2009
(51) Int. Cl.: C04B 28/10, C04B 38/10, E04C 1/41, C04B 18/24

(54) **Composition de mousse de chaux pour isolation thermique**

(30) Priorité: 19.02.2008 FR 0800875
(71) Demandeur: Imerys TC, 69760 Limonest (FR)
(72) Inventeur: Tavernier, Luc, 69610 Souzy (FR); Jund, Jacky, 31830 Plaisance du Touch (FR)
(74) Mandataire: Maureau, Philippe

(57) **Abrégé**

L'invention concerne une composition de mousse de chaux comprenant par rapport au poids total de matières sèches de ladite composition:
- au moins 65%, de préférence entre 70 et 90%, en poids de chaux hydraulique naturelle ou d'un mélange de chaux hydraulique naturelle et de ciment,
- 0,5% à 10% en poids de fibres, de préférence de fibres végétales,
- 1 % à 2,5% en poids d'agent moussant, et
- une quantité d'eau variant de 100% à 200% en poids d'eau, et éventuellement
- jusqu'à 30%, de préférence entre 5 et 25%, en poids de charges minérales, et éventuellement
- un accélérateur de prise, et éventuellement,
- un réducteur d'eau, et éventuellement
- un gélifiant,
ainsi que son procédé de fabrication et celui de remplissage d'éléments de constructions, tels que notamment des briques de terre cuite.

## Description

La présente invention concerne une composition de mousse de chaux destinée au remplissage des alvéoles d'éléments de construction, et notamment de briques de mur en terre cuite à alvéoles multiples.

L'élément de construction communément appelé « monomur », à savoir une brique creuse en terre cuite à alvéoles verticales, est devenu l'un des produits phare de l'industrie de la briqueterie, du fait qu'il permet l'édification de murs d'épaisseur suffisante, ne nécessitant pas d'isolation supplémentaire, sous un climat de type tempéré européen par exemple. En effet, les habitations construites à partir de briques de monomurs bénéficient d'une forte inertie thermique (conservation de la fraîcheur en été, de la chaleur en hiver), ainsi que des propriétés propres à la terre cuite, que sont notamment la régulation de l'humidité et l'absence de produits synthétiques.

Les rangées des alvéoles de briques de monomur sont séparées les unes des autres par des parois longitudinales de terre cuite, ainsi que par des parois transversales décalées pour limiter les problèmes de ponts thermiques.

Les briques de monomur comportent donc une multitude d'alvéoles de manière à emprisonner de l'air qui est un bon isolant thermique. En effet, l'emprisonnement d'air dans des alvéoles les plus petites possibles a pour conséquences de réduire :
- les mouvements de convection (transfert entre l'air et la matière solide telle que la terre cuite résultant du déplacement des particules d'air au niveau de l'interface),
- les transferts par conduction.

Toutefois, l'augmentation du nombre de parois longitudinales et transversales accroît la difficulté de fabrication de ces briques de monomur, dans la mesure où ces produits en terre cuite sont extrudés, et qu'une parfaite stabilité en sortie d'extrusion est requise avant le séchage.

De plus, pour bénéficier d'une bonne isolation thermique, la solution consiste à augmenter l'épaisseur des murs.

Ainsi, les problèmes techniques à résoudre dans le domaine des briques de monomur sont les suivants :
- disposer d'un élément de construction de type brique qui soit plus facile à fabriquer, en considération des procédés de briqueterie, et bénéficiant d'une capacité d'isolation thermique accrue, avec
- une épaisseur de parois raisonnable, et un nombre de cloisons réduit.

Ces problèmes techniques peuvent être résolus en réduisant le nombre d'alvéoles et en remplissant ces alvéoles par un matériau de faible conductivité thermique. En effet, la réduction du nombre d'alvéoles a pour conséquence une augmentation de leurs dimensions, ce qui favorise les mouvements de convection, et, par suite les transferts thermiques au sein de la brique. Le remplissage des alvéoles par un matériau isolant a pour effet de bloquer ces mouvements de convection tout en conférant à la brique, grâce aux performances thermiques intrinsèques du matériau de remplissage, un haut pouvoir isolant.

Différentes solutions d'isolants thermiques destinés à remplir les alvéoles d'éléments de construction (tels que des briques de terre cuite) ont été envisagées.

Tout d'abord, de nombreux documents de l'état de l'art mentionnent le recours à des matériaux isolants synthétiques.

A cet égard, on peut notamment citer la demande de brevet FR 2 521 197 A1 qui divulgue un élément de construction du genre brique creuse en terre cuite de forme générale parallélépipédique comportant une pluralité d'alvéoles parallèles entre elles et débouchant sur deux faces opposées du parallélépipède, dont « les alvéoles et les demi-alvéoles d'extrémité de la partie médiane sont remplies d'un matériau cellulaire à haut pouvoir d'isolation thermique tel qu'une mousse de polyuréthane ou une mousse de polystyrène, ou de tout autre matériau fibreux (laine de verre ou de roche) ou divisé (agglomérat de liège) ayant un tel pouvoir d'isolation.» II est aussi précisé que ce matériau sera avantageusement incorporé à l'élément de construction à l'usine de fabrication, mais aussi qu'il pourra être livré séparément et être introduit dans l'élément sur le chantier d'utilisation. »

Toutefois, on peut déplorer les inconvénients suivants au recours à des matériaux isolants synthétiques :
- risque d'inflammabilité,
- émission de gaz et de fumées toxiques lors d'incendie,
- coûts élevés de réalisation de ces matériaux, et
- pollution engendrée pour leur fabrication.

Le dernier inconvénient mentionné, à savoir celui de la pollution, correspond aux préoccupations majeures actuelles que sont la mise au point de produits naturels, et en particulier dans le domaine de l'habitation.

La demande de brevet FR 2 876 400 A1 décrit une brique creuse en terre cuite, dont les alvéoles sont remplies par un matériau isolant formé d'un mélange contenant :
- un produit poreux en vrac tel que du verre cellulaire, du verre expansé, de la ponce, voire de préférence, de la perlite expansée ou de la vermiculite expansée,
- de l'eau,
- un épaississant tel que de la cellulose, de préférence de l'amidon,
- et éventuellement d'autres composants tels qu'une silice colloïdale, du silicate ou aussi un agent hydrophobe ou encore des dispersants plastiques.

Dans le cas d'un matériau isolant à base de perlite, du fait de sa pulvérulence, il est donc nécessaire d'ajouter au mélange un liant; ce qui amoindrit la conductivité thermique de la perlite et donc de la brique remplie de cette composition à base de perlite.

La présente invention propose une solution d'isolant thermique permettant de réduire la conductivité thermique d'éléments de construction à alvéoles multiples, que sont en particulier les briques de monomurs, et ce en supprimant les mouvements de convection dans lesdites alvéoles, qui sont à l'origine de transferts de chaleur dans l'épaisseur des éléments de construction.

Pour ce faire, la présente invention consiste en une composition de mousse de chaux de faible densité (à savoir inférieure ou égale à 0,2) et de conductivité thermique très basse (de environ 0,03 à 0,08 W/mK), dont les alvéoles d'éléments de construction (tels que les briques de monomurs) sont remplies, garantissant ainsi un bilan thermique global très favorable, et ce malgré la substitution de volumes d'air par un solide poreux.

De plus, outre la suppression des phénomènes de convection, il est possible d'améliorer le bilan thermique en limitant les ponts thermiques par la mise en oeuvre d'éléments de construction avec un nombre de cloisons réduit.

Ainsi, un premier objet de l'invention est une composition de mousse de chaux.

Un second objet de l'invention est un procédé de fabrication de ladite mousse de chaux.

Un troisième objet de l'invention est un procédé de remplissage de ladite mousse de chaux dans les alvéoles d'éléments de construction, qui peuvent être notamment des briques de terre cuite.

Un quatrième objet de l'invention est un élément de construction (tel que par exemple une brique de terre cuite) rempli de cette composition de mousse de chaux.

Dans le cadre de la présente invention, on entend par éléments de construction à alvéoles multiples une brique de maçonnerie (par exemple une brique pour paroi ou une plaque de construction, une plaque de dalle ou un élément de plafond). L'élément de construction peut être constitué d'un matériau quelconque tel que la terre cuite, le béton, le ciment, un matériau silico-calcaire, du bois, de l'aggloméré ou encore de la pierre naturelle.

Dans un mode de réalisation de l'invention, la composition de mousse de chaux comprend par rapport au poids total de matières sèches de ladite composition :
- au moins 65%, de préférence entre 70% et 90%, en poids de chaux hydraulique naturelle ou d'un mélange de chaux hydraulique naturelle et de ciment,
- 0,5% à 10% en poids de fibres, de préférence de fibres végétales,
- 1 % à 2,5% en poids d'au moins un agent moussant, et
- une quantité d'eau variant de 100% à 200% en poids par rapport au poids total de matières sèches.

Lorsque dans un mode de réalisation de l'invention, la composition de mousse de chaux comprend un mélange de chaux hydraulique naturelle et de ciment, alors la proportion en poids de ciment dans ledit mélange constitué de chaux hydraulique naturelle et de ciment peut être comprise entre 20% et 65%.

Ainsi, comme expliqué ci-dessus, la composition de mousse de chaux selon l'invention comprend à un pourcentage de 65%, de préférence entre 70% et 90 % en poids, soit de la chaux hydraulique naturelle seule, soit un mélange de chaux hydraulique naturelle et de ciment.

Le ciment peut être de type ciment fondu ou de type ciment prompt. Le ciment est utilisé en tant qu'accélérateur de prise.

Le pourcentage d'eau est ajusté en fonction de la densité souhaitée de la mousse.

La composition selon l'invention peut éventuellement aussi comprendre des charges minérales, jusqu'à 30%, de préférence entre 5% et 25%, en poids par rapport au poids total de matières sèches.

II peut s'agir d'argile, de pigments minéraux tels que des oxydes de fer, ainsi que de leurs mélanges.

Dans un mode de réalisation de l'invention, l'argile est broyée de manière à avoir une granulométrie inférieure à 400µ.

L'argile améliore la stabilité de la mousse avant la prise hydraulique de la chaux, en participant à la formation de bulles fines et régulières.

La composition de mousse de chaux selon l'invention peut aussi comprendre au moins un accélérateur de prise, tel qu'un chlorure. II est ajouté pour favoriser la prise hydraulique de la chaux. II est dosé entre 1% et 4% en poids par rapport au poids de la chaux.

Dans un mode de réalisation préféré de l'invention, l'accélérateur de prise est le chlorure de calcium.

D'autres composants peuvent être ajoutés à la composition selon l'invention, parmi lesquels:
- un réducteur d'eau ou fluidifiant, permettant de limiter la quantité d'eau nécessaire à l'obtention de la mousse,
- un gélifiant pour améliorer la stabilité de la mousse avant la prise hydraulique.

Dans le cadre de la présente invention, le réducteur d'eau ou fluidifiant permet de raccourcir le temps de séchage, et par voie de conséquence le temps de durcissement de la mousse.

Le réducteur d'eau ou fluidifiant peut être choisi, par exemple, dans la famille des résines acryliques ou encore parmi les fluidifiants que sont le naphtalène-sulfonate sodique ou calcique, les alkylarylsulfonates, les esters de polyglycol, les sels hydroxycarboxyliques de sodium-ammonium et de triéthanolamine, les polymères hydroxylés, les acides polyhydroxycarboxyliques, les sels alcalins ou alcalino-terreux d'un acide naphtalène-sulfonique polycondensé au formaldéhyde et les produits de condensation de mélamine sulfonée et de formaldéhyde.

Le gélifiant peut être choisi parmi, par exemples, de l'amidon ou un alginate.

Qu'elle soit hydraulique ou aérienne, la chaux est en effet connue pour laisser « respirer » les murs des bâtis anciens et nouveaux, et ce en favorisant les échanges hygrométriques. Elle capte et rejette la vapeur d'eau, permettant ainsi d'éviter les remontées d'humidité.

La chaux est donc un produit naturel tout à fait écologique, garantissant le confort intérieur d'une habitation (de par sa participation à l'isolation thermique et physique) tout en permettant de réaliser des économies d'énergie. En effet, le chauffage d'une habitation est d'autant plus performant que les murs sont exempts d'humidité.

Plus précisément, en ce qui concerne la chaux hydraulique (obtenue à partir de calcaire argileux), cette dernière est particulièrement préconisée pour les lieux humides et où la circulation de l'air est difficile. Elle est ainsi usuellement utilisée pour enduire les supports à fortes caractéristiques mécaniques, monter des murs en pierre et maçonner des tuiles par exemples.

Dans un mode de réalisation de l'invention, la chaux hydraulique naturelle peut être choisie parmi celles de type NHL 3,5 ou de type NHL 5, « NHL » étant l'abréviation anglophone de « Natural Hydraulic Lime ».

Les chaux hydrauliques se distinguent en effet de par leur résistance à la compression, mesurée après un mois de vieillissement.

Ainsi, « NHL 3,5 » correspond à une chaux hydraulique de résistance comprise entre 3,5 ou 10 MPa (soit entre 35 et 100 Kg/cm²) et « NHL 5 » à une résistance comprise entre 5 et 15 MPa (soit entre 50 et 150 Kg/cm²).

La masse volumique apparente des chaux hydrauliques naturelles est comprise entre 0,4 et 1 Kg/L de poudre. La surface de Blaine, exprimée en m²/g, peut être comprise entre 0,8 et 1,1.

Dans la cadre de la présente invention, les fibres peuvent avoir une longueur comprise de préférence entre 6 mm et 12 mm.

II peut s'agir de fibres végétales telles que celles du lin, du chanvre, ou encore du bois, qui seront utilisées seules ou en mélanges.

Les fibres végétales confèrent à la mousse de chaux une meilleure stabilité à l'état humide, contribuant ainsi à maintenir constants les volumes de mousse après le remplissage des alvéoles des éléments de construction. Par ailleurs, elles augmentent la cohésion et la résistance mécanique de ladite mousse, et ce au cours du séchage et après le durcissement.

La composition de mousse de chaux selon l'invention peut comprendre au moins un agent moussant. II peut s'agir d'un tensio-actif non ionique, anionique, ou amphotère, ou encore de protéine, de protéide, pris seul ou en mélange.

Le au moins un agent moussant peut être choisi parmi les tensio-actifs tels que l'alkylphénol oxyéthyléné, les esters phosphatés, l'alcool tridécyclique oxyéthyléné, l'alkylpoly(éthylène-oxy)glycolamide, les alcools gras éthoxylés, les esters de sorbitane éthoxylés, les acides gras éthoxylés, les esters de polyols, les alkylphénol éthoxylés, les amides gras éthoxylés, le sulforicinate de triéthanolamine, les alkylsulfates d'alcools gras, les alkyléthersulfates, les nonyphénol-éthersulfates, les sulfosuccinates, les hémi-sulfosuccinates, les alkylbenzène-sulfonates, le laurylsulfo-acétate, les dérivés de mono- et dicarboxcylé d'imidazoline sur base de coco, les dérivés d'ammonium quaternaire sur base oxyéthylénée sulfatée.

Dans un mode de réalisation préféré de l'invention, l'agent moussant est le tensio-actif anionique : dodecylbenzène sulfonate.

L'agent moussant a pour rôle de créer, après introduction dans l'eau et agitation mécanique, de fines bulles d'air constituant l'ossature de la mousse de chaux selon l'invention.

Par rapport à l'état de la technique ci-dessus évoqué, on peut relever les avantages suivants de la composition de mousse de chaux selon l'invention :
- une composition tout à fait naturelle, et en parfait accord avec les briques de terre cuite (matériau naturel, d'usage ancestral et traditionnel, tout comme l'est la chaux),
- une composition naturelle sans risque de dégagements de fumées toxiques en cas d'élévation de la température,
- une conductivité thermique très basse, de l'ordre de 0,05 W/mK,
- possibilité d'utilisation de cette composition dans des éléments de construction (tels que des briques) à profils simplifiés, et pouvant comporter des alvéoles de plus grande section, étant donné que les mouvements de convection sont supprimés par l'injection de mousse de chaux, et ainsi
- fabrication simplifiée d'éléments de constructions tels que des briques à bonnes capacité d'isolation thermique.

La présente invention concerne aussi un procédé de fabrication de la mousse de chaux de composition selon l'invention qui comprend au moins les étapes suivantes :
a) on introduit l'eau et l'agent moussant dans un mélangeur,
b) on met sous agitation le mélange obtenu à l'étape a),
c) on ajoute progressivement la chaux et éventuellement le ciment, les fibres, et éventuellement l'argile, l'accélérateur de prise, le réducteur d'eau, le gélifiant,
d) on brasse le mélange obtenu à l'étape c) jusqu'à obtention d'une mousse de densité de l'ordre de 0,4,
e) on transfère ladite mousse obtenue à l'étape d) du mélangeur à un réservoir de stockage.

Dans le cadre de l'invention, le mélangeur est un mélangeur choisi par exemple parmi les mélangeurs de type mélangeur planétaire à mouvement épicycloïdal ou de type à stator et rotor.

Dans un mode de réalisation de l'invention, le transfert de la mousse peut s'effectuer par écoulement gravitaire ou par pompage.

La présente invention concerne aussi un procédé de remplissage d'un élément de construction de forme générale parallélépipédique comportant au moins une alvéole débouchant sur deux faces opposées du parallélépipède, par de la mousse de chaux de composition selon l'invention, comprenant au moins les étapes suivantes :
a) on remplit partiellement ou totalement la au moins une alvéole de l'élément de construction avec ladite composition de mousse de chaux,
b) on élimine le surplus éventuel de ladite mousse,
c) on met à sécher et à durcir par prise hydraulique l'élément de construction obtenu à l'issue de l'étape b).

Lors de l'étape a) du remplissage, l'élément de construction aura été préalablement placé sur un support plan étanche. Le remplissage peut notamment être effectué par écoulement gravitaire ou par pompage.

L'élimination à l'étape b) du surplus éventuel de ladite mousse peut notamment être effectuée à l'aide d'une raclette.

Dans un mode de réalisation de l'invention, un durcisseur peut être appliqué à l'issue de l'étape c) sur les surfaces de mousse de chaux au débouché de la au moins une alvéole. Ledit durcisseur peut être choisi par exemple parmi les silicates de soude.

Dans un mode de réalisation de l'invention, l'élément de construction comporte de multiples alvéoles. II peut s'agir d'une brique de terre cuite.

Un des moyens de mise en oeuvre de l'étape c) peut être l'étuvage.

Dans un mode de réalisation de l'invention, l'étuvage de l'étape c) est effectué à une température pouvant être comprise entre 45°C et 80°C.

Dans un mode de réalisation préféré de l'invention, l'étuvage est réalisé à 50°C et très rapidement après le remplissage.

En effet, si le temps écoulé entre le remplissage et l'étuvage est trop important, la mousse de chaux risque de « s'affaisser », de même que si la température d'étuvage n'est pas assez élevée.

Par ailleurs, si la température d'étuvage est trop élevée, la mousse de chaux risque de déborder des alvéoles.

C'est pourquoi, il peut être avantageux, dans un mode de réalisation de l'invention, que les alvéoles des éléments de construction soient partiellement remplies de mousse de chaux selon l'invention, l'expansion complète de la mousse se produisant alors pendant l'étuvage.

Toutefois, il faut aussi bien veiller à ce que ladite mousse de chaux ne s'expanse pas trop fortement, au risque de la fragiliser.

La présente invention concerne aussi un élément de construction de forme générale parallélépipédique comportant au moins une alvéole débouchant sur deux faces opposées du parallélépipède remplie de la composition de mousse de chaux selon l'invention.

La présente invention concerne un élément de construction de forme générale parallélépipédique comportant au moins une alvéole débouchant sur deux faces opposées du parallélépipède susceptible d'être obtenu par le procédé de remplissage selon l'invention. Dans un mode de réalisation préféré de l'invention, ledit élément de construction est une brique de terre cuite.

Dans un mode de réalisation de l'invention, l'élément de construction est à multiples alvéoles.

De plus, ledit élément de construction peut comprendre des nervures sur les parois intérieures des alvéoles. Lesdites nervures peuvent en effet faciliter l'ancrage de la mousse de chaux aux parois des alvéoles.

Un durcisseur, choisi par exemple parmi les silicates de soude, peut être appliqué sur les surfaces de mousse de chaux au débouché des alvéoles.

Dans un mode de réalisation de l'invention, l'élément de construction peut consister en une brique de terre cuite.

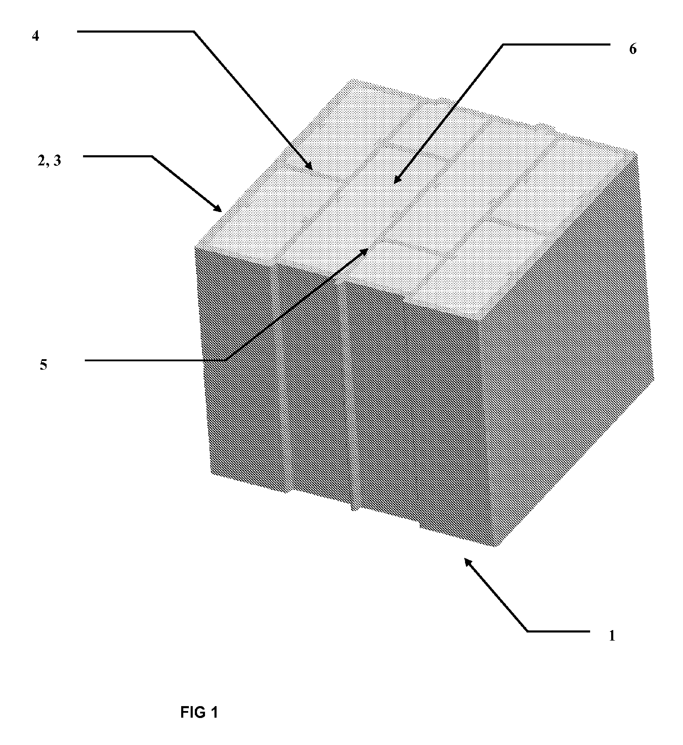

La présente invention sera mieux comprise à l'aide de la description qui suit faite en référence à la figure 1.

La figure 1 est une représentation en perspective d'un élément de construction selon l'invention.

L'élément de construction qui est une brique 1 comprend des alvéoles 2 remplies de la composition de mousse de chaux 3. Les rangées des alvéoles 2 sont séparées les unes des autres par des parois longitudinales 4 et par des parois transversales 5 décalées pour limiter le phénomène de ponts thermiques. Les faces intérieures des alvéoles 2 comprennent des nervures en queue d'aronde 6 s'étendant selon l'axe longitudinal des alvéoles 2.

## Revendications

1. Composition de mousse de chaux comprenant par rapport au poids total de matières sèches de ladite composition :
- au moins 65%, de préférence entre 70% et 90%, en poids de chaux hydraulique naturelle ou d'un mélange de chaux hydraulique naturelle et de ciment,
- 0,5% à 10% en poids de fibres, de préférence de fibres végétales,
- 1 % à 2,5% en poids d'au moins un agent moussant, et
- une quantité d'eau variant de 100% à 200% en poids par rapport au poids total de matières sèches.

2. Composition selon la revendication 1, **caractérisée en ce que** la proportion en poids de ciment dans ledit mélange de chaux hydraulique naturelle et de ciment est comprise entre 20% et 65%.

3. Composition selon l'une quelconque des revendications 1 à 2, **caractérisée en ce qu'**elle comprend en outre jusqu'à 30%, de préférence entre 5% et 25%, en poids de charges minérales par rapport au poids total de matières sèches, lesdites charges minérales étant choisies parmi l'argile, les pigments minéraux tels que des oxydes de fer, et leurs mélanges.

4. Composition selon l'une quelconque des revendications 1 et 3, **caractérisée en ce qu'**elle comprend en outre au moins un accélérateur de prise tel qu'un chlorure, de préférence le chlorure de calcium.

5. Composition selon la revendication 4, **caractérisée en ce que** ledit au moins un accélérateur de prise est dosé entre 1 % et 4% par rapport au poids de la chaux.

6. Composition selon l'une quelconque des revendications 1 à 5, **caractérisée en ce qu'**elle comprend en outre un réducteur d'eau tel qu'une résine acrylique et/ou un gélifiant tel qu'un amidon ou un alginate.

7. Composition selon l'une quelconque des revendications 1 à 6, **caractérisée en ce que** le au moins un agent moussant est choisi parmi les tensio-actifs non ionique, anionique, ou amphotère, les protéines, les protéides, pris seul ou en mélanges.

8. Composition selon la revendication 7, **caractérisée en ce que** l'agent moussant est le dodecylbenzène sulfonate.

9. Procédé de fabrication de la mousse de chaux de composition telle que définie selon l'une quelconque des revendications 1 à 8, **caractérisé en ce qu'**il comprend au moins les étapes suivantes :
a) on introduit l'eau et l'agent moussant dans un mélangeur,
b) on met sous agitation le mélange obtenu à l'étape a),
c) on ajoute progressivement la chaux et éventuellement le ciment, les fibres, et éventuellement l'argile, l'accélérateur de prise, le réducteur d'eau, le gélifiant,
d) on brasse le mélange obtenu à l'étape c) jusqu'à obtention d'une mousse de densité de l'ordre de 0,4,
e) on transfère ladite mousse obtenue à l'étape d) du mélangeur à un réservoir de stockage.

10. Procédé selon la revendication 9, **caractérisé en ce que** le transfert de la mousse s'effectue par écoulement gravitaire ou par pompage.

11. Procédé de remplissage d'un élément de construction de forme générale parallélépipédique comportant au moins une alvéole débouchant sur deux faces opposées du parallélépipède, par de la mousse de chaux de composition telle que définie selon l'une quelconque des revendications 1 à 8, comprenant au moins les étapes suivantes :
a) on remplit partiellement ou totalement la au moins une alvéole de l'élément de construction avec ladite composition de mousse de chaux,
b) on élimine le surplus éventuel de ladite mousse,
c) on met à sécher et à durcir par prise hydraulique l'élément de construction obtenu à l'issue de l'étape b).

12. Procédé selon la revendication 11, **caractérisé en ce qu'**un durcisseur est appliqué à l'issue de l'étape c) sur les surfaces de mousse de chaux au débouché de la au moins une alvéole.

13. Procédé selon l'une quelconque des revendications 11 à 12, **caractérisé en ce que** l'étape c) est un étuvage effectué à une température comprise entre 45°C et 80°C.

14. Elément de construction de forme générale parallélépipédique comportant au moins une alvéole débouchant sur deux faces opposées du parallélépipède susceptible d'être obtenu par le procédé de remplissage selon l'une quelconque des revendications 11 à 13.

15. Elément de construction selon la revendication 14, **caractérisé en ce qu'**il s'agit d'une brique en terre cuite.
